# EUROPEAN PATENT APPLICATION

(11) **EP 4 622 061 A1**
(43) Date of publication of application: **24.09.2025**
(21) Application number: 23891303.2
(22) Date of filing: 24.10.2023
(51) Int. Cl.: H02J 50/60, H01F 5/00, H01F 38/14, H02J 50/10

(54) **FOREIGN OBJECT DETECTION DEVICE AND COIL DEVICE**

(30) Priority: 16.11.2022 JP 2022183536
(71) Applicant: OMRON Corporation, Kyoto 600-8530 (JP)
(72) Inventor: ONOZAKA, Ken, Kyoto-shi, Kyoto 600-8530 (JP); ITO, Yuki, Kyoto-shi, Kyoto 600-8530 (JP); MISHIMA, Taichi, Kyoto-shi, Kyoto 600-8530 (JP); NAGAOKA, Shingo, Kyoto-shi, Kyoto 600-8530 (JP)
(74) Representative: HGF
(86) International application number: PCT/JP2023/038357
(87) International publication number: WO 2024/106148

(57) **Abstract**

Reducing size of added search coil disposed to overlap search coil in order to reduce region where foreign object detection is difficult. Foreign object detection device comprises first search coil comprising first coils, second search coil comprising second coils, and control unit. First coils are electrically connected in series such that current flowing through adjacent first coils is in opposite direction, and second coils are electrically connected in series such that current flowing through adjacent second coils is in opposite direction. Wiring comprised each first coils are arranged in parallel and close to each other at boundary portion between adjacent first coils. Control unit determines presence or absence of foreign object by applying voltage to each search coil. Second search coil is arranged such that region surrounded by wiring of second coil overlaps end of boundary portion of first coils

## Description

### TECHNICAL FIELD

The present disclosure relates to a coil device having a coil and a foreign object detection device having the coil device.

### BACKGROUND ART

An example of a foreign object detection device having a coil is disclosed in Patent Document 1. The foreign object detection device disclosed in Patent Document 1 includes a set sensor coil and a determination device that detects a foreign object according to a voltage of the set sensor coil. The set sensor coil includes a plurality of first unit sensor coils in a first winding direction and a plurality of second unit sensor coils in a second winding direction opposite to the first winding direction.

In the foreign object detection device disclosed in Patent Document 1, in a case where there is no foreign object on the set sensor coil, electromotive forces of the same magnitude and opposite signs are generated in each of the first unit sensor coil and the second unit sensor coil that are penetrated by magnetic flux from the outside. The electromotive force generated in the first unit sensor coil and the electromotive force generated in the second unit sensor coil are canceled out. Therefore, in a case where there is no foreign object, the electromotive force generated in the set sensor coil is zero.

On the other hand, in the foreign object detection device disclosed in Patent Document 1, in a case where the foreign object is present on the set sensor coil, the magnetic flux from the outside passing through each unit sensor coil is biased. As a result, the electromotive force generated in the set sensor coil is not zero. The determination device determines whether there is a foreign object based on whether the power of the set sensor coil is zero.

### PRIOR ART DOCUMENT

### PATENT DOCUMENT

Patent Document 1: WO 2016/031209 A

### SUMMARY OF THE INVENTION

### PROBLEMS TO BE SOLVED BY THE INVENTION

The detection method of the foreign object detection device disclosed in Patent Document 1 is a separate excitation method that detects presence or absence of a foreign object based on an electromotive force generated in a set sensor coil by a magnetic flux from the outside. In the foreign object detection device of the separate excitation method, in a case where the foreign object is present on the boundary line between the first unit sensor coil and the second unit sensor coil adjacent to each other, the electromotive force is canceled similarly to the case where the foreign object is not present, and the electromotive force generated in the set sensor coil may become zero. That is, in the foreign object detection device of the separate excitation method, the entire the boundary line between the first unit sensor coil and the second unit sensor coil adjacent to each other is a low-sensitivity region that is a region where foreign object detection is difficult.

Patent Document 1 discloses a foreign object detection device in which two set sensor coils are disposed to overlap with each other at positions shifted from each other. In this foreign object detection device, even in a case where a foreign object is present on the low-sensitivity region in one set sensor coil and foreign object detection cannot be performed, foreign object detection can be performed in the other set sensor coil.

However, in the foreign object detection device of the separate excitation method, as described above, the low-sensitivity region extends over the entire boundary line between the first unit sensor coil and the second unit sensor coil. Therefore, in a case where an added set sensor coil is overlapped on the low-sensitivity region of one set sensor coil, the size of the added set sensor coil becomes large. For example, in a case where the foreign object detection device is applied to wireless power transfer, the power supply amount of the wireless power transfer may be reduced due to the presence of the set sensor coil, so that the size of the set sensor coil is preferably as small as possible.

Therefore, in order to solve the above problem, an object of the present disclosure is to provide a foreign object detection device capable of reducing the size of an added search coil disposed to overlap one search coil in order to reduce a low-sensitivity region where foreign object detection is difficult.

### SOLUTIONS TO THE PROBLEMS

A foreign object detection device according to one aspect of the present disclosure includes:
a first search coil that includes a plurality of first coils arranged in plan view;
at least one second search coil that includes a plurality of second coils arranged in plan view; and
a control unit that is capable of applying a voltage to the first search coil and the second search coil,
in which in the first search coil, the plurality of first coils are electrically connected in series such that, when a current in a first winding direction flows through one of the two adjacent first coils, a current in a second winding direction opposite to the first winding direction flows through another one of the two adjacent first coils,
in the second search coil, the plurality of second coils are electrically connected in series such that, when a current in the first winding direction flows through one of the two adjacent second coils, a current in the second winding direction flows through another one of the two adjacent second coils,
in the first search coil, a wiring included in one of the two first coils and a wiring included in the other one of the two first coils are arranged in parallel and close to each other at a boundary portion between the two adjacent first coils,
the control unit determines presence or absence of a foreign object on the first search coil by applying a voltage to the first search coil, and determines presence or absence of a foreign object on the second search coil by applying a voltage to the second search coil, and
the second search coil is arranged such that a region surrounded by a wiring of the second coil overlaps a part of the boundary portion of the first coil including an end of the boundary portion of the first coil in plan view.

### EFFECTS OF THE INVENTION

According to the present disclosure, it is possible to reduce the size of an added search coil disposed to overlap one search coil in order to reduce a low-sensitivity region where foreign object detection is difficult.

### BRIEF DESCRIPTION OF THE DRAWINGS

[Fig. 1] Fig. 1 schematically shows an example of a wireless power supply device according to an embodiment.
[Fig. 2] Fig. 2 is a plan view showing a first search coil according to the embodiment.
[Fig. 3] Fig. 3 schematically shows a plan view showing the first search coil according to the embodiment.
[Fig. 4] Fig. 4 schematically shows a plan view showing a second search coil according to the embodiment.
[Fig. 5] Fig. 5 schematically shows a plan view showing the first search coil and the second search coil according to the embodiment.
[Fig. 6] Fig. 6 schematically shows a block diagram of a control unit according to the embodiment.
[Fig. 7] Fig. 7 schematically shows a graph showing a voltage with respect to time when a voltage is applied to a search coil.
[Fig. 8] Fig. 8 shows a flowchart for explaining an order of foreign object detection by the foreign object detection device.
[Fig. 9] Fig. 9 shows a flowchart for explaining a procedure for determining presence or absence of a foreign object by the foreign object detection device.
[Fig. 10] Fig. 10 schematically shows a plan view showing a first search coil of a modification.
[Fig. 11] Fig. 11 schematically shows a plan view showing a first search coil of a modification.
[Fig. 12] Fig. 12 schematically shows a plan view showing a first search coil of a modification.
[Fig. 13] Fig. 13 schematically shows a plan view showing a second search coil of a modification.
[Fig. 14] Fig. 14 schematically shows a wireless power supply device according to a modification.
[Fig. 15] Fig. 15 schematically shows a wireless power supply device according to a modification.
[Fig. 16] Fig. 16 schematically shows a wireless power supply device according to a modification.
[Fig. 17] Fig. 17 schematically shows a wireless power supply device according to a modification.
[Fig. 18] Fig. 18 schematically shows a wireless power supply device according to a modification.
[Fig. 19] Fig. 19 schematically shows a plan view showing a first search coil and a second search coil of a modification.

### DETAILED DESCRIPTION

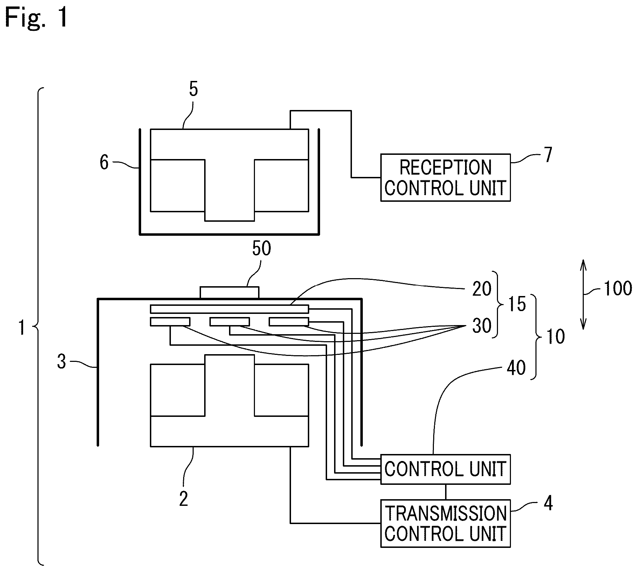

Fig. 1 schematically shows an example of a wireless power supply device according to an embodiment. A foreign object detection device 10 shown in Fig. 1 is applied to, for example, a wireless power supply device 1. The foreign object detection device 10 determines whether a foreign object is mixed in the wireless power supply device 1 when wireless power supply is being executed in the wireless power supply device 1.

As shown in Fig. 1, the wireless power supply device 1 includes a transmission coil 2, a transmission side cover 3, a transmission control unit 4, a reception coil 5, a reception side cover 6, a reception control unit 7, and a foreign object detection device 10.

The transmission coil 2 has, for example, a wiring pattern formed on the surface or inside of a substrate. The wiring pattern is an example of wiring. The wiring pattern is made of a conductive material such as copper. The wiring pattern is formed in a whirlpool shape, a spiral shape, or the like. The configuration of the transmission coil 2 is not limited to the wiring pattern formed on the substrate. For example, the transmission coil 2 may be configured by an electric wire formed in a whirlpool shape, a spiral shape, or the like. In this case, the electric wire is an example of the wiring.

The transmission side cover 3 is a box-shaped member. The transmission coil 2 is disposed inside the transmission side cover 3. The material of the transmission side cover 3 is arbitrary, and is, for example, resin. In Fig. 1, the lower side of the transmission side cover 3 is opened, but the configuration of the transmission side cover 3 is not limited thereto. For example, the side of the transmission side cover 3 may be opened, or the transmission side cover 3 may not be opened.

The transmission control unit 4 controls transmission of wireless power transfer (WPT) from the transmission coil 2 to the reception coil 5. The transmission control unit 4 includes, for example, a microcontroller unit (MCU). Upon receiving the power supply start signal, the MCU of the transmission control unit 4 applies a voltage to the transmission coil 2. The power supply start signal is transmitted to the transmission control unit 4 from, for example, a control unit (not shown) that controls the entire operation of the wireless power supply device 1, an interface unit (not shown) that mediates communication with an external device, and the like. A current flows through the transmission coil 2 to which the voltage is applied. As a result, a magnetic flux is generated so as to penetrate the transmission coil 2. In the present embodiment, the transmission control unit 4 is electrically connected to a control unit 40 of the foreign object detection device 10.

The transmission coil 2, the transmission side cover 3, and the transmission control unit 4 are components of a transmitter (Tx) of the wireless power supply device 1.

The reception coil 5 is disposed above the transmission coil 2 so as to face the transmission coil 2. The transmission side cover 3, the reception side cover 6, and a first search coil 20 and a second search coil 30 of the foreign object detection device 10 are provided between the reception coil 5 and the transmission coil 2. The reception coil 5 is configured similarly to the transmission coil 2. When the magnetic flux generated in the transmission coil 2 passes through the reception coil 5, an electromotive force is generated in the reception coil 5. That is, power is transmitted from the transmission coil 2 to the reception coil 5.

The reception side cover 6 is configured similarly to the transmission side cover 3. The reception coil 5 is disposed inside the reception side cover 6.

The reception control unit 7 controls reception of wireless power transfer from the transmission coil 2 to the reception coil 5. The reception control unit 7 includes, for example, a microcontroller. The control performed on the reception coil 5 by the reception control unit 7 is, for example, control of an output voltage. The output voltage is adjusted (controlled) to an appropriate value according to a device or a battery connected to the wireless power supply device 1.

The reception coil 5, the reception side cover 6, and the reception control unit 7 are components of a receiver (Rx) of the wireless power supply device 1.

The foreign object detection device 10 performs foreign object detection (FOD). In the present embodiment, the foreign object detection device 10 determines whether a foreign object 50 including metal or the like is mixed between the transmission coil 2 and the reception coil 5 of the wireless power supply device 1. In a case where the foreign object 50 is mixed between the transmission coil 2 and the reception coil 5 while the wireless power supply device 1 executes wireless power supply, the foreign object 50 may generate heat. In a case where it is determined that there is the foreign object 50, the foreign object detection device 10 transmits a signal indicating that the application of the voltage to the transmission coil 2 is stopped to the transmission control unit 4. When receiving the signal, the transmission control unit 4 stops applying the voltage to the transmission coil 2. As a result, the heat generation of the foreign object 50 can be reduced or prevented.

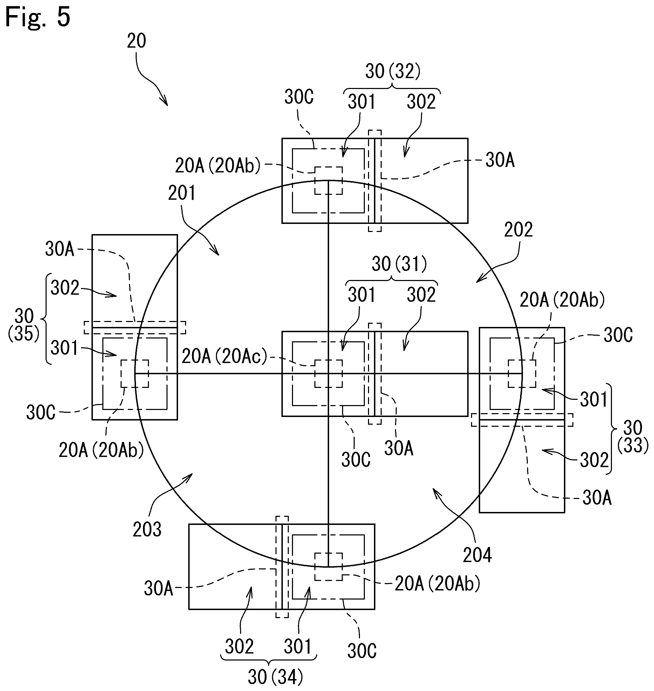

The foreign object detection device 10 includes a coil device 15 and a control unit 40. The coil device 15 includes a first search coil 20 and a plurality of second search coils 30. Although three second search coils 30 are shown in Fig. 1, in the present embodiment, the foreign object detection device 10 includes five second search coils 30 (see Fig. 5).

The first search coil 20 and the plurality of second search coils 30 are disposed inside the transmission side cover 3. The first search coil 20 and the plurality of second search coils 30 are located above the transmission coil 2 and face the transmission coil 2 in a vertical direction 100. The first search coil 20 and the plurality of second search coils 30 are located below the reception coil 5, and face the reception coil 5 in the vertical direction 100 with the transmission side cover 3 and the reception side cover 6 interposed therebetween. Although the first search coil 20 is disposed above the second search coil 30 in Fig. 1, the arrangement may be reversed. That is, the second search coil 30 may be disposed above the first search coil 20.

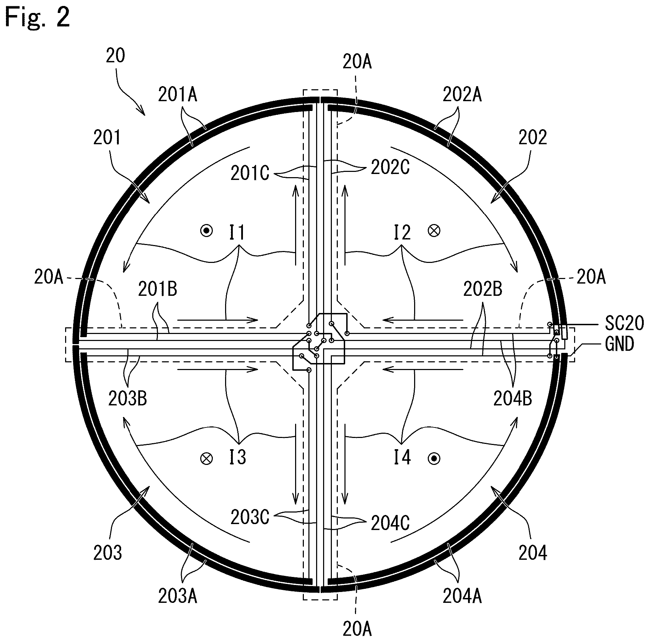

Fig. 2 shows a plan view showing the first search coil according to the embodiment. As shown in Fig. 2, the first search coil 20 includes four first coils 201, 202, 203, and 204. The number of first coils included in the first search coil 20 is not limited to four. In Fig. 2, the four first coils 201, 202, 203, and 204 have the same shape and the same size, but may have different shapes or different sizes.

In plan view from above, the four first coils 201, 202, 203, and 204 are arranged on a virtual plane intersecting the vertical direction 100. In the present embodiment, the four first coils 201, 202, 203, and 204 are arranged in two rows and two columns.

The first coil 201 includes wiring patterns 201A, 201B, and 201C. The first coil 202 includes wiring patterns 202A, 202B, and 202C. The first coil 203 includes wiring patterns 203A, 203B, and 203C. The first coil 204 includes wiring patterns 204A, 204B, and 204C.

The four first coils 201, 202, 203, and 204 are electrically connected in series so as to satisfy the following two conditions. In the first condition, at a boundary portion between two adjacent first coils, a wiring pattern of one of the two first coils and a wiring pattern of the other one of the two first coils are arranged in parallel and close to each other. In the second condition, when a current flows through the first search coil 20, directions of currents flowing through two adjacent first coils among the four first coils 201, 202, 203, and 204 are opposite to each other.

The first condition will be described in detail below. A region indicated by a broken line in Fig. 2 is a boundary portion 20A between the four first coils 201, 202, 203, and 204. In the boundary portion 20A between the first coils 201 and 202, the wiring pattern 201C of the first coil 201 and the wiring pattern 202C of the first coil 202 are arranged in parallel and close to each other. In addition, at the boundary portion 20A between the first coils 201 and 203, the wiring pattern 201B of the first coil 201 and the wiring pattern 203B of the first coil 203 are arranged in parallel and close to each other. In addition, at the boundary portion 20A between the first coils 202 and 204, the wiring pattern 202B of the first coil 202 and the wiring pattern 204B of the first coil 204 are arranged in parallel and close to each other. In addition, at the boundary portion 20A between the first coils 203 and 204, the wiring pattern 203C of the first coil 203 and the wiring pattern 204C of the first coil 204 are arranged in parallel and close to each other. Note that "parallel to each other" includes not only being completely parallel but also being substantially parallel.

The second condition will be described in detail below. As indicated by arrows in Fig. 2, when a counterclockwise current I1 flows in the first coil 201, a clockwise current I2 flows in the first coil 202 adjacent to the first coil 201, and a clockwise current I3 flows in the first coil 203 adjacent to the first coil 201. When the counterclockwise current I1 flows through the first coil 201, a counterclockwise current I4 flows through the first coil 204 adjacent to the first coils 202 and 203 through which the clockwise currents I2 and I3 flow. The counterclockwise currents I1 and I4 are an example of the current in the first winding direction. The clockwise currents I2 and I3 are an example of the current in the second winding direction. In the above case, magnetic flux is generated in the first coils 201 and 204 from the back side to the front side of the paper surface of Fig. 2, and magnetic flux is generated in the first coils 202 and 203 from the front side to the back side of the paper surface of Fig. 2.

As described above, in the first search coil 20, the plurality of first coils 201, 202, 203, and 204 are electrically connected in series so that when a current in the first winding direction flows through one of the two adjacent first coils, a current in the second winding direction opposite to the first winding direction flows through the other one of the two adjacent first coils.

In a case where the four first coils 201, 202, 203, and 204 are electrically connected in series as described above, the currents flowing through the adjacent wiring patterns when the current flows through the first search coil 20 have the same direction. More specifically, the direction of the current flowing through the wiring pattern 201B of the first coil 201 is the same as the direction of the current flowing through the wiring pattern 203B of the first coil 203. The direction of the current flowing through the wiring pattern 201C of the first coil 201 is the same as the direction of the current flowing through the wiring pattern 202C of the first coil 202. The direction of the current flowing through the wiring pattern 204B of the first coil 204 is the same as the direction of the current flowing through the wiring pattern 202B of the first coil 202. The direction of the current flowing through the wiring pattern 204C of the first coil 204 is the same as the direction of the current flowing through the wiring pattern 203C of the first coil 203.

Although the number of turns of each of the first coils 201, 202, 203, and 204 shown in Fig. 2 is two, the number of turns may be other than two. The numbers of turns of the first coils 201, 202, 203, and 204 may be different from each other.

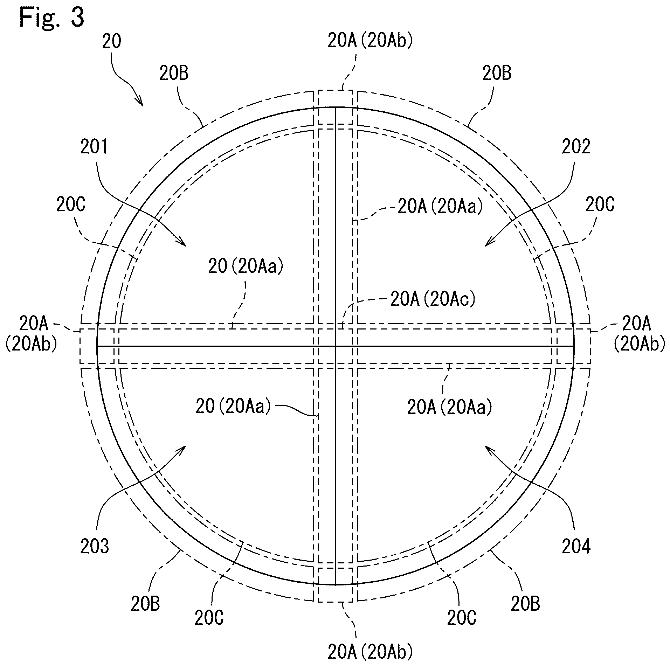

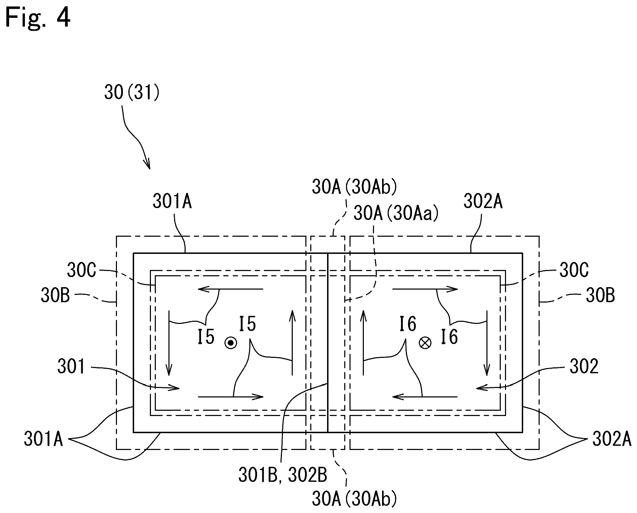

Fig. 3 schematically shows a plan view showing the first search coil according to the embodiment. Fig. 4 schematically shows a plan view showing the second search coil according to the embodiment. In Figs. 3 and 4 and Figs. 5, 10 to 13, and 19 to be described later, the first search coil 20 is schematically shown as shown in Fig. 3 instead of the diagram showing the wiring pattern as shown in Fig. 2 for the sake of simplicity. Similarly, the second search coil 30 is also schematically shown as shown in Fig. 4.

Hereinafter, the configuration of the second search coil 30 will be described. Here, the foreign object detection device 10 includes five second search coils 30 (31 to 35) as shown in Fig. 5, but since the configurations of the respective second search coils 30 are the same, the configuration of the second search coil 31 will be described here, and the description of the configurations of the other second search coils 32 to 35 will be omitted.

As shown in Fig. 4, the second search coil 30 includes two second coils 301 and 302. The number of second coils included in the second search coil 30 is not limited to two. In Fig. 4, the two second coils 301 and 302 have the same shape and the same size, but may have different shapes or different sizes.

In plan view seen from above, the two second coils 301 and 302 are arranged to cross the vertical direction 100. In the present embodiment, the two second coils 301 and 302 are arranged side by side.

The two second coils 301 and 302 are electrically connected in series so as to satisfy the same conditions as the first condition and the second condition of the first search coil 20.

In the first condition, the wiring pattern of one 301 of the two second coils and the wiring pattern of the other one 302 of the two second coils are arranged in parallel and close to each other at the boundary portion 30A between the two adjacent second coils 301 and 302. Note that the condition corresponding to the first condition may not be satisfied.

In the second condition, when the current flows through the second search coil 30, the directions of the currents flowing through the two adjacent second coils 301 and 302 are opposite to each other.

Specifically, as indicated by an arrow in Fig. 4, when a counterclockwise current I5 flows through the second coil 301, a clockwise current I6 flows through the second coil 302 adjacent to the second coil 301. The counterclockwise current I5 is an example of a current in the first winding direction. The clockwise current I6 is an example of the current in the second winding direction. In the above case, magnetic flux is generated in the second coil 301 from the back side to the front side of the paper surface of Fig. 2, and magnetic flux is generated in the second coil 302 from the front side to the back side of the paper surface of Fig. 2.

As described above, in the second search coil 30, the plurality of second coils 301 and 302 are electrically connected in series so that when a current in the first winding direction flows through the one 301 of the two adjacent second coils, a current in the second winding direction opposite to the first winding direction flows through the other one 302 of the two adjacent second coils.

In a case where the two second coils 301 and 302 are electrically connected in series as described above, similarly to the case where the current flows through the first search coil 20, the currents flowing through the adjacent wiring patterns when the current flows through the second search coil 30 have the same direction.

The number of turns of each of the second coils 301 and 302 is two, but the number of turns is not limited to two. The numbers of turns of the second coils 301 and 302 may be different from each other.

As shown in Fig. 3, the first search coil 20 and its peripheral region include a boundary portion 20A, a peripheral edge portion 20B, and a surrounding portion 20C. The boundary portion 20A is a wiring pattern constituting a boundary between two adjacent first coils in the first search coil 20 and a peripheral region thereof. The peripheral edge portion 20B is a wiring pattern constituting the outer edge of the first search coil 20 and a peripheral region thereof. The surrounding portion 20C is a region surrounded by each wiring pattern in the first coils 201, 202, 203, and 204 of the first search coil 20.

The boundary portion 20A includes a main portion 20Aa and ends 20Ab and 20Ac. The end 20Ab is a boundary portion between two adjacent first coils in the outer edge portion of the first search coil 20 in plan view. The end 20Ac is a boundary portion between the plurality of adjacent first coils in a region that is not the outer edge portion of the first search coil 20 in plan view. A region that is not the outer edge portion of the first search coil 20 in plan view refers to the inside of the first search coil 20 in plan view. The inside of the first search coil 20 in plan view refers to a region inside the wiring patterns 201A, 202A, 203A, and 204A in plan view. In the present embodiment, the end 20Ac is located at the central portion of the first search coil 20 in the inside of the first search coil 20 in plan view. The end 20Ac may be located in a region that is not the outer edge portion of the first search coil 20 and is not the central portion. The main portion 20Aa is a region of the boundary portion 20A excluding the ends 20Ab and 20Ac.

As shown in Fig. 4, the second search coil 30 and its peripheral region include a boundary portion 30A, a peripheral edge portion 30B, and a surrounding portion 30C. The boundary portion 30A is a wiring pattern constituting a boundary between two adjacent second coils in the second search coil 30 and a peripheral region thereof. The peripheral edge portion 30B is a wiring pattern constituting the outer edge of the second search coil 30 and a peripheral region thereof. The surrounding portion 30C is a region surrounded by each wiring pattern in the second coils 301 and 302 of the second search coil 30.

The boundary portion 30A includes a main portion 30Aa and an end 30Ab. The end 30Ab is located at both ends of the boundary portion 30A, and is a boundary portion between two adjacent second coils 301 and 302 at the outer edge of the second search coil 30. The main portion 30Aa is a region of the boundary portion 30A excluding the end 30Ab. In the present embodiment, the second search coil 30 does not have an end positioned at the central portion like the end 20Ac of the boundary portion 20A of the first search coil 20, but may have such an end.

As shown in Fig. 1, the first search coil 20 and the second search coil 30 are located between the transmission coil 2 and the reception coil 5. Therefore, during the wireless power transfer from the transmission coil 2 to the reception coil 5, the magnetic flux generated in the transmission coil 2 passes through the first search coil 20 and the second search coil 30. As a result, an induction current is generated in the first search coil 20 and the second search coil 30. Here, the wiring patterns of the first search coil 20 and the second search coil 30 are formed so as to satisfy the second condition. Therefore, the induction currents generated in the first coils 201, 202, 203, and 204 of the first search coil 20 cancel each other, and the induction currents generated in the second coils 301 and 302 of the second search coil 30 cancel each other. As a result, the heat generation of the first search coil 20 and the second search coil 30 due to the magnetic flux generated in the transmission coil 2 is reduced.

As will be described later, a voltage is applied from the control unit 40 to the first search coil 20 and the second search coil 30. Then, a current flows through the first search coil 20 and the second search coil 30 in directions of arrows shown in Figs. 2 and 4. As a result, in the first search coil 20, magnetic flux is generated in the first coils 201 and 204 from the back side to the front side of the paper surface of Fig. 2, and magnetic flux is generated in the first coils 202 and 203 from the front side to the back side of the paper surface of Fig. 2. In the second search coil 30, magnetic flux is generated in the second coil 301 from the back side to the front side of the paper surface of Fig. 2, and magnetic flux is generated in the second coil 302 from the front side to the back side of the paper surface of Fig. 2.

At this time, at the ends 20Ab and 20Ac of the boundary portion 20A of the first search coil 20, the magnetic fluxes generated in the two adjacent first coils cancel each other. Similarly, at the end 30Ab of the boundary portion 30A of the second search coil 30, the magnetic fluxes generated in the two adjacent second coils cancel each other. As a result, the magnetic flux density decreases at the ends 20Ab and 20Ac of the boundary portion 20A and the end 30Ab of the boundary portion 30A. Due to this decrease in magnetic flux density, in a case where there is the foreign object 50 (see Fig. 1) on the ends 20Ab and 20Ac of the boundary portion 20A and the end 30Ab of the boundary portion 30A, it may be difficult to detect the foreign object 50. That is, the ends 20Ab and 20Ac of the boundary portion 20A and the end 30Ab of the boundary portion 30A are low-sensitivity regions that are regions where foreign object detection is difficult.

On the other hand, in a region (main portion 20Aa, peripheral edge portion 20B, and surrounding portion 20C) other than the ends 20Ab and 20Ac of the boundary portion 20A of the first search coil 20, the decrease in the magnetic flux density is small or the magnetic flux density does not decrease as compared with the ends 20Ab and 20Ac. Similarly, in a region (main portion 30Aa, peripheral edge portion 30B, and surrounding portion 30C) other than the end 30Ab of the boundary portion 30A of the second search coil 30, the decrease in the magnetic flux density is small or the magnetic flux density does not decrease as compared with the end 30Ab.

Based on the above, in the foreign object detection device 10, a region different from the low-sensitivity region of the second search coil 30 is arranged to overlap the low-sensitivity region of the first search coil 20. Details will be described below.

Fig. 5 schematically shows a plan view showing the first search coil and the second search coil according to the embodiment. As shown in Fig. 5, in the present embodiment, the foreign object detection device 10 includes five second search coils 30 (31 to 35). The number of the second search coils 30 included in the foreign object detection device 10 is not limited to five. The foreign object detection device 10 may include at least one second search coil 30.

As shown in Fig. 5, the second search coil 30 is disposed so as to overlap the first search coil 20 such that the surrounding portion 30C of the second coil 301 overlaps the ends 20Ab and 20Ac of the boundary portion 20A of the first search coil 20 in plan view. In plan view, the second search coil 30 may be disposed so as to overlap the first search coil 20 such that the surrounding portion 30C of the second coil 302 overlaps the ends 20Ab and 20Ac of the boundary portion 20A of the first search coil 20.

In the present embodiment, the surrounding portion 30C of the second search coil 31 is disposed on the end 20Ac of the boundary portion 20A of the first search coil 20.

That is, in plan view, the surrounding portion 30C of the second search coil 31 overlaps the end 20Ac located in a region (inside the first search coil 20) that is not the outer edge portion of the first search coil 20, of the end of the boundary portion 20A of the first search coil 20. In plan view, the end 20Ac of the boundary portion 20A overlapped by the surrounding portion 30C of the second search coil 31 is surrounded by the plurality of first coils 201 to 204.

Further, the surrounding portion 30C of the second search coil 32 is disposed on the end 20Ab of the boundary portion 20A of the first coils 201 and 202. The surrounding portion 30C of the second search coil 33 is disposed on the end 20Ab of the boundary portion 20A of the first coils 202 and 204. The surrounding portion 30C of the second search coil 34 is disposed on the end 20Ab of the boundary portion 20A of the first coils 203 and 204. The surrounding portion 30C of the second search coil 35 is disposed on the end 20Ab of the boundary portion 20A of the first coils 201 and 203.

That is, in plan view, the surrounding portion 30C of each of the second search coils 32, 33, 34, and 35 overlaps the end located at the outer edge portion of the first search coil 20 among the ends of the boundary portion 20A of the first search coil 20.

The outer edge portion of the first search coil 20 in plan view indicates, for example, a region where the wiring patterns 201A, 202A, 203A, and 204A in plan view are present. In plan view, the end 20Ab of the boundary portion 20A where the surrounding portions 30C of the second search coils 32, 33, 34, and 35 overlap is not completely surrounded by the plurality of first coils 201 to 204. For example, the end 20Ab of the boundary portion 20A where the surrounding portion 30C of the second search coil 32 overlaps is partially surrounded by the two first coils 201 and 202 (the lower half of the paper surface of Fig. 2), but the remaining portion (the upper half of the paper surface of Fig. 2) is not surrounded by the first coils.

As described above, the first search coil 20 and the second search coil 30 are disposed so as to overlap each other in plan view, whereby the following effects are obtained. That is, even in a case where the foreign object 50 on the low-sensitivity region of the first search coil 20 cannot be detected, the foreign object 50 on the low-sensitivity region can be detected by detecting the second search coil 30 disposed to overlap the low-sensitivity region.

In the present embodiment, each of the second search coils 30 is smaller than the first search coil 20 in plan view. However, in plan view, the second search coil 30 may have a size equal to or larger than that of the first search coil 20. For example, the second search coil 30 may include four coils similarly to the first search coil 20.

In plan view, the second search coil 30 may be disposed so as to overlap the first search coil 20 such that the surrounding portion 30C of the boundary portion 30A overlaps a part of the main portion 20Aa of the boundary portion 20A in addition to the ends 20Ab and 20Ac of the boundary portion 20A. That is, the second search coil 30 is arranged such that a region surrounded by the wiring pattern of the second coil overlaps a part of the boundary portion 20A of the first coil including the ends 20Ab and 20Ac of the boundary portion 20A of the first coil in plan view.

The control unit 40 shown in Fig. 1 can apply a voltage to the first search coil 20 and the second search coil 30. In addition, the control unit 40 determines the presence or absence of the foreign object 50 from the resonance waveform generated in the first search coil 20 and the second search coil 30.

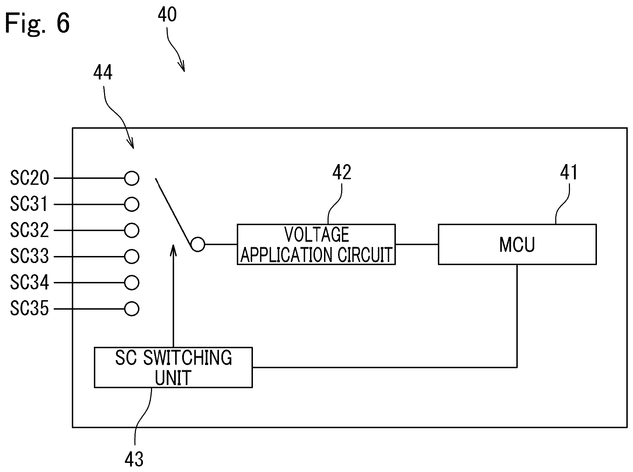

Fig. 6 schematically shows a block diagram of a control unit according to the embodiment. As shown in Fig. 6, the control unit 40 includes a microcontroller (MCU) 41, a voltage application circuit 42, a search coil (SC) switching unit 43, and a switch 44.

The MCU 41 executes calculation for realizing the application of a voltage and the determination of the presence or absence of the foreign object 50 described above. The voltage application circuit 42 includes a circuit that performs amplification or the like for applying an appropriate level of voltage to the first search coil 20 and the second search coil 30 on the basis of a command from the MCU 41. In addition, the voltage application circuit 42 sends resonance waveforms from the first search coil 20 and the second search coil 30 to the MCU 41. On the basis of a command from the MCU 41, the SC switching unit 43 switches the switch 44 so as to send the voltage from the voltage application circuit 42 to the search coils 20, 31, 32, 33, 34, and 35 corresponding to the command.

Signal lines SC20, SC31, SC32, SC33, SC34, and SC35 extending from the switch 44 shown in Fig. 6 are electrically connected to the first search coil 20, the second search coil 31, the second search coil 32, the second search coil 33, the second search coil 34, and the second search coil 35, respectively. Each of the search coils 20, 31, 32, 33, 34, and 35 includes a signal line electrically connected to the switch 44 of the control unit 40 and a ground line electrically connected to the reference potential of the control unit 40. The signal line SC20 shown in Fig. 2 is electrically connected to the switch 44 of the control unit 40, and a ground line GND shown in Fig. 2 is electrically connected to the reference potential of the control unit 40. In Figs. 3 and 4, the signal line and the ground line are omitted.

The configuration of the control unit 40 is not limited to the configuration shown in Fig. 6. For example, the control unit 40 may include a memory and a central processing unit (CPU). In this case, for example, the CPU executes a program stored in the memory, thereby executing the above calculation. Furthermore, for example, the control unit 40 may include a circuit capable of executing the above-described calculation. Such a circuit is, for example, an application specific integrated circuit (ASIC), a field programmable gate array (FPGA), or the like. The control unit 40 may be realized by combining the above-described configurations. For example, the control unit 40 may include a memory, a CPU, and an ASIC.

In the present embodiment, the control unit 40 selectively applies a voltage to the first search coil 20 and the second search coil 30, and determines the presence or absence of the foreign object 50 from the resonance waveform generated in the first search coil 20 and the second search coil 30 by the applied voltage. Details will be described below.

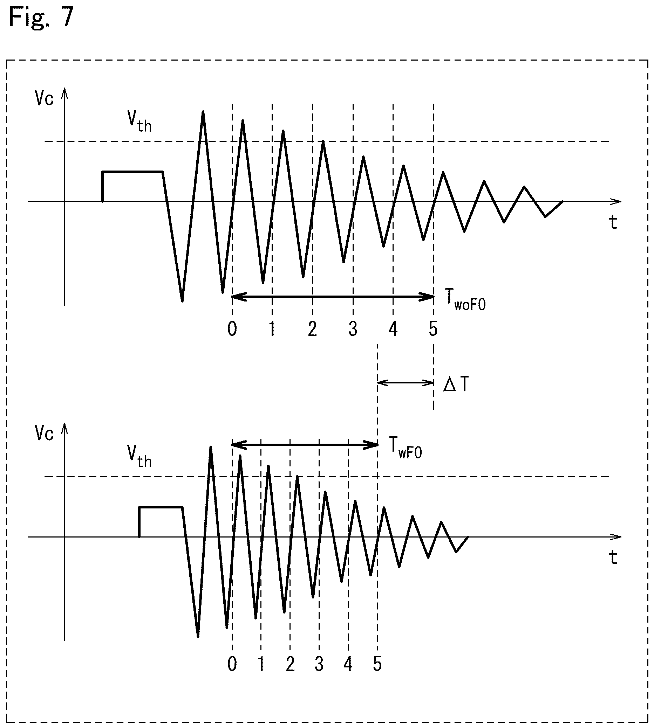

Fig. 7 schematically shows a graph showing a voltage with respect to time when a voltage is applied to the search coil. As shown in Fig. 7, the control unit 40 applies an impulse voltage to the selection search coil (one of the first search coil 20 and the second search coils 31 to 35) selected by the switch 44. Each of the first search coil 20 and the second search coil 30 is a parallel LC resonance circuit. Therefore, in the selection search coil, a resonance waveform is generated with respect to the applied impulse voltage.

In a case where there is no foreign object 50 on the selection search coil, a resonance waveform as shown in the upper part of Fig. 7 is generated. On the other hand, in a case where there is the foreign object 50 on the selection search coil, a resonance waveform as shown in the lower part of Fig. 7 is generated. The period of the resonance waveform shown in the upper part of Fig. 7 is longer than the period of the resonance waveform shown in the lower part of Fig. 7. The control unit 40 determines the presence or absence of the foreign object 50 based on the difference in the cycle. A memory (not shown) in the control unit 40 stores a preset voltage threshold Vth and a preset time threshold Tth.

The voltage threshold Vth is used to set the timing to start counting of the timer circuit built in the control unit 40. The timer circuit starts counting at timing when the voltage value of the resonance waveform exceeds the voltage threshold Vth. The control unit 40 measures, with a timer circuit, a time (hereinafter, referred to as a vibration time) until the frequency of the resonance waveform reaches a preset number of times (five times in Fig. 7). Note that the timer circuit is reset after determination of the presence or absence of the foreign object 50.

A vibration time TwoF0 in a case where there is no foreign object 50 on the selection search coil is measured in advance and stored in the memory in the control unit 40. The control unit 40 compares a vibration time TwF0 measured by the timer circuit in the determination of the presence or absence of the foreign object 50 with the vibration time TwoF0 stored in the memory, and calculates a difference ΔT between the two vibration times. The difference ΔT is compared with the time threshold Tth stored in the memory. The period of the resonance waveform in a case where there is the foreign object 50 on the selection search coil is shorter than the period of the resonance waveform in a case where there is no foreign object 50 on the selection search coil. The control unit 40 determines that there is no foreign object 50 on the selection search coil in a case where the difference ΔT is smaller than the time threshold Tth, and determines that there is a foreign object 50 on the selection search coil in a case where the difference ΔT is larger than the time threshold Tth. In the present embodiment, in a case where the difference ΔT is equal to the time threshold Tth, the control unit 40 determines that there is no foreign object 50 on the selection search coil, but may determine that there is a foreign object 50.

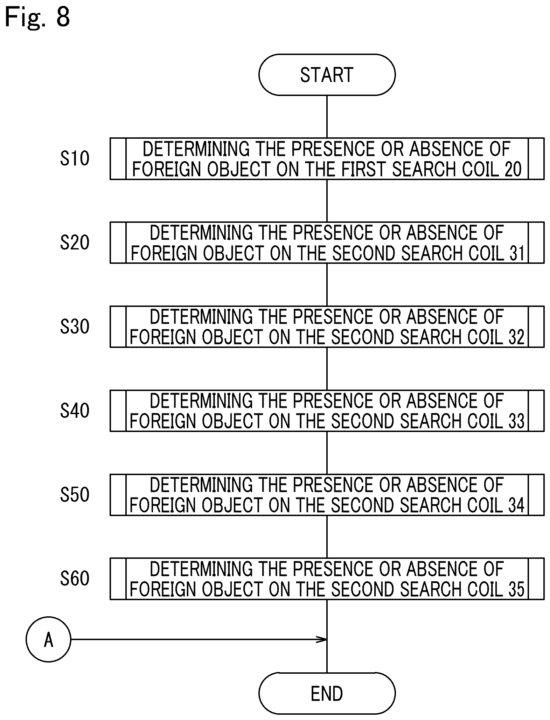

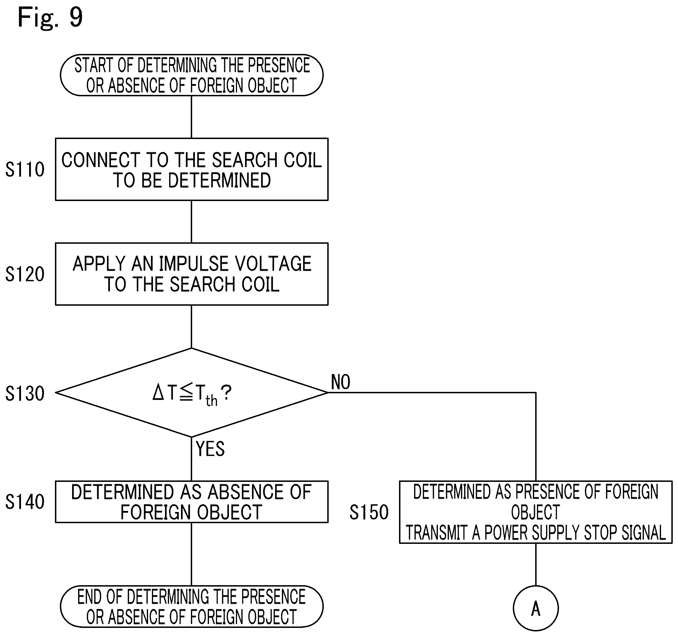

Hereinafter, the operation of foreign object detection by the foreign object detection device 10 will be described with reference to Figs. 8 and 9. Fig. 8 shows a flowchart for explaining the order of foreign object detection by the foreign object detection device. Fig. 9 shows a flowchart for explaining a procedure for determining presence or absence of a foreign object by the foreign object detection device.

The foreign object detection by the foreign object detection device 10 is executed, for example, every preset time (for example, 1 second) during the wireless power supply of the wireless power supply device 1.

As shown in Fig. 8, in the foreign object detection, the control unit 40 first detects whether there is a foreign object 50 on the first search coil 20, for example, whether there is a foreign object 50 directly above the first search coil 20 on the upper surface of the transmission side cover 3 (S10). Next, the control unit 40 detects whether there is a foreign object 50 on the second search coil 30, for example, whether there is a foreign object 50 directly above the second search coil 30 on the upper surface of the transmission side cover 3 (S20 to S60). In the present embodiment, the control unit 40 detects the presence or absence of the foreign object 50 in the order of the second search coils 31, 32, 33, 34, and 35 (S20 to S60). That is, in the present embodiment, the control unit 40 selectively applies a voltage to the first search coil 20 and the second search coil 30. After detecting the presence or absence of the foreign object 50 on the first search coil 20, the control unit 40 detects the presence or absence of the foreign object 50 on the second search coil 30. The order of the foreign object detection is not limited to the order shown in Fig. 8. For example, in reverse to Fig. 8, the control unit 40 may detect the presence or absence of the foreign object 50 on the second search coil 30 and then detect the presence or absence of the foreign object 50 on the first search coil 20.

In each step (S10 to S60) shown in Fig. 8, the processing shown in Fig. 9 is executed. Hereinafter, processing of determining the presence or absence of the foreign object executed in step S10 will be described with reference to Fig. 9.

As shown in Fig. 9, the SC switching unit 43 sets the switch 44 in the signal line SC20 on the basis of a command from the MCU 41. As a result, the control unit 40 and the first search coil 20 are electrically connected (S110). At this time, the control unit 40 and the second search coil 30 are not electrically connected.

Next, the voltage application circuit 42 applies an impulse voltage to the first search coil 20 selected by the switch 44 based on a command from the MCU 41 (S120). As a result, the resonance waveform generated in the first search coil 20 is sent to the control unit 40.

The control unit 40 calculates the difference ΔT as described above, and compares the difference ΔT with the time threshold Tth (S130).

In a case where the difference ΔT is larger than the time threshold Tth (S130: NO), the control unit 40 determines that there is a foreign object on the first search coil 20 (S150). On the other hand, in a case where the difference ΔT is the time threshold Tth or less (S130: YES), the control unit 40 determines that there is no foreign object on the first search coil 20 (S140). As described above, in step S10, the control unit 40 determines the presence or absence of the foreign object 50 on the first search coil 20 by applying a voltage to the first search coil.

In a case where it is determined that there is the foreign object 50 on the first search coil 20, the control unit 40 transmits a power supply stop signal to the transmission control unit 4 (S150). When receiving the power supply stop signal, the transmission control unit 4 stops applying the voltage to the transmission coil 2. In this case, the wireless power supply is stopped, and the foreign object detection processing shown in Fig. 8 is also stopped.

In a case where it is determined that there is no foreign object 50 on the first search coil 20 (S140), the control unit 40 subsequently executes the processing in and after step S20 of Fig. 8. That is, the control unit 40 continuously determines whether there is a foreign object on the second search coil 30. Also after step S20, the processing shown in Fig. 9 is executed as in step S10.

For example, in the processing shown in Fig. 9 executed in step S20, the control unit 40 and the second search coil 31 are electrically connected (S110), and an impulse voltage is applied to the second search coil 31 (S120). Next, the control unit 40 calculates the difference ΔT and compares the difference ΔT with the time threshold Tth (step S130). The control unit 40 determines that there is no foreign object on the second search coil 31 in a case where the difference ΔT is the time threshold Tth or less (S130: YES) (S140), and determines that there is a foreign object on the second search coil 31 in a case where the difference ΔT is larger than the time threshold Tth (S130: NO) (S150). As described above, in step S20, the control unit 40 determines the presence or absence of the foreign object 50 on the second search coil 31 by applying a voltage to the second search coil 31. The determination of the presence or absence of the foreign object 50 on the second search coils 32, 33, 34, and 35 is executed similarly.

According to the present embodiment, the control unit 40 determines the presence or absence of a foreign object on the first search coil 20 by applying a voltage to the first search coil 20, and determines the presence or absence of a foreign object on the second search coil 30 (31 to 35) by applying a voltage to the second search coil 30. That is, the detection method according to the present embodiment is not the separate excitation method but the self-excitation method for detecting the presence or absence of a foreign object based on the voltage applied to the own coil. In the self-excitation method, the low-sensitivity region, which is a region where foreign object detection is difficult, is not the entire region of the boundary portion 20A between the two adjacent first coils but the ends 20Ab and 20Ac of the boundary portion 20A of the first coil.

In the present embodiment, the second search coil 30 is disposed such that the surrounding portion 30C, which is a region surrounded by the wiring pattern of the second coil 301, overlaps the ends 20Ab and 20Ac of the boundary portion 20A of the first coil in plan view. As a result, even in a case where it is difficult to detect a foreign object by applying a voltage to the first search coil 20 because the foreign object is present on the low-sensitivity region of the first search coil 20, the foreign object can be detected by applying a voltage to the second search coil 30.

Further, in the present embodiment, each of the second search coils 31 to 35 is arranged such that the surrounding portion 30C, which is a region surrounded by the wiring patterns 301A and 301B of the second coil 301, overlaps a part of the boundary portion 20A of the first core in plan view. That is, in the present embodiment, each of the second search coils 31 to 35 is arranged so as to overlap not the entire region but a part of the boundary portion 20A of the first coil in plan view. Therefore, in the present embodiment, the size of each of the second search coils 31 to 35 can be reduced.

In plan view, the ends 20Ab and 20Ac of the boundary portion 20A of the first coil can be located at the outer edge portion of the first search coil 20 and at a place other than the outer edge portion of the first search coil 20 (inside the first search coil 20). In the case of detecting the foreign object on the first search coil 20, the necessity of detecting the foreign object in the first search coil 20 is higher than the necessity of detecting the foreign object in the outer edge portion of the first search coil 20. According to the present embodiment, in plan view, the end 20Ac of the boundary portion 20A of the first coil overlapped by the surrounding portion 30C that is the region surrounded by the wiring patterns 301A and 301B of the second coil 301 is surrounded by the plurality of first coils 201 to 204. That is, in plan view, the end 20Ac of the boundary portion 20A of the first coils 201 to 204 overlapped by the surrounding portion 30C is located in the central portion of the first search coil 20 which is a part of the inside of the first search coil 20. That is, according to the present embodiment, it is possible to improve the reliability of the foreign object detection in the region where the necessity of the foreign object detection is high.

Each of the second search coils 31 to 35 only needs to have a size capable of including the low-sensitivity region of the first search coil 20 in plan view. According to the present embodiment, each of the second search coils 31 to 35 is smaller than the first search coil 20 in plan view. Therefore, it is possible to prevent each of the second search coils 31 to 35 from becoming larger than necessary.

According to the present embodiment, each of the second search coils 31 to 35 includes two second coils 301 and 302. In this case, each of the second search coils 31 to 35 can be made smaller than a configuration in which each of the second search coils 31 to 35 has three or more second coils.

In a case where the control unit 40 applies a voltage to the first search coil 20 and the second search coil 30 in parallel, there is a possibility that the magnetic flux generated in the first search coil 20 and the magnetic flux generated in the second search coil 30 interact with each other to cause erroneous detection of the foreign object 50. According to the present embodiment, since the control unit 40 selectively applies a voltage to the first search coil 20 and the second search coil 30, the possibility of occurrence of the erroneous detection can be reduced.

According to the present embodiment, first, a voltage is applied to the first search coil 20 to detect the presence or absence of a foreign object in a region excluding the low-sensitivity region of the first search coil 20, and thereafter, a voltage is applied to the second search coil 30 to detect the presence or absence of a foreign object in the low-sensitivity region of the first search coil 20. Usually, the proportion occupied by the low-sensitivity region in the region on the first search coil 20 is smaller than the proportion occupied by the region other than the low-sensitivity region. That is, according to the present embodiment, in a case where the presence or absence of the foreign object on the first search coil 20 is detected, the presence or absence of the foreign object in the region occupying a large proportion is detected in advance. As a result, the foreign object detection can be quickly executed.

In the present embodiment, the first search coil 20 has a shape as shown in Figs. 2 and 3, but is not limited thereto.

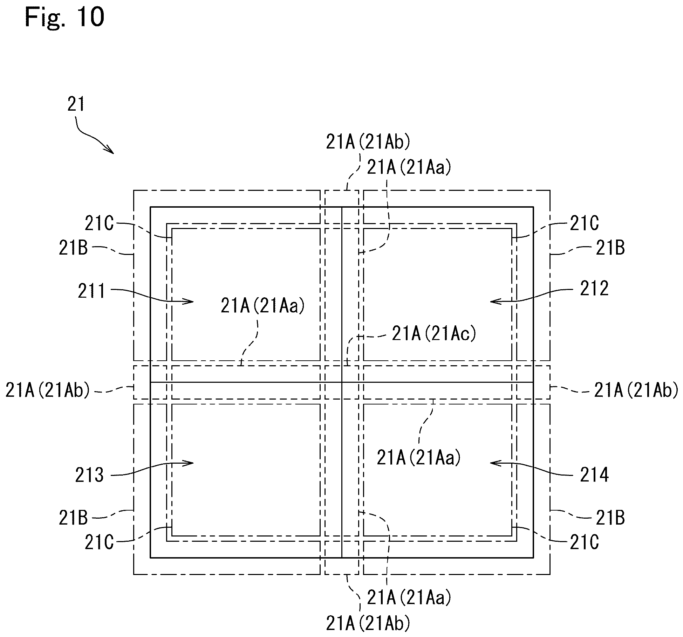

For example, the foreign object detection device 10 may include a first search coil 21 having a rectangular shape as shown in Fig. 10. Fig. 10 schematically shows a plan view showing a first search coil of a modification. The first search coil 21 includes four first coils 211 to 214. The first search coil 21 and its peripheral region include a boundary portion 21A, a peripheral edge portion 21B, and a surrounding portion 21C. The boundary portion 21A includes a main portion 21Aa and ends 21Ab and 21Ac.

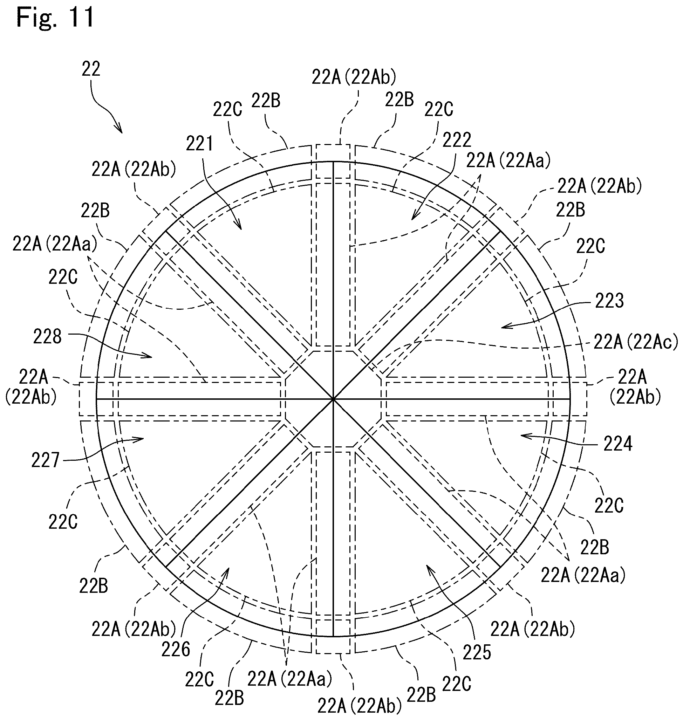

Further, for example, the foreign object detection device 10 may include a circular first search coil 22 as shown in Fig. 11. Fig. 11 schematically shows a plan view showing a first search coil of a modification. The first search coil 22 includes eight first coils 221 to 228. The first search coil 22 and its peripheral region include a boundary portion 22A, a peripheral edge portion 22B, and a surrounding portion 22C. The boundary portion 22A includes a main portion 22Aa and ends 22Ab and 22Ac.

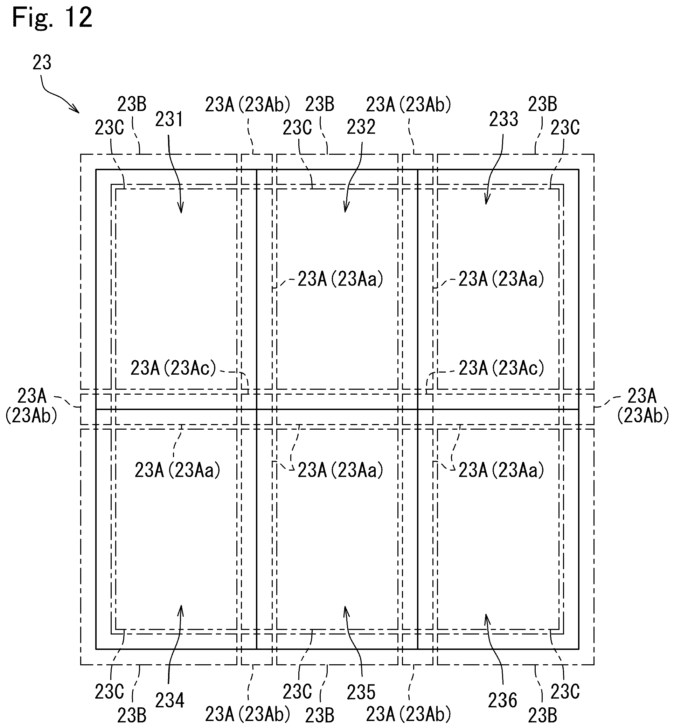

In addition, for example, the foreign object detection device 10 may include a first search coil 23 having a rectangular shape as shown in Fig. 12. Fig. 12 schematically shows a plan view showing a first search coil of a modification. The first search coil 23 includes six first coils 231 to 236. The first search coil 23 and its peripheral region include a boundary portion 23A, a peripheral edge portion 23B, and a surrounding portion 23C. The boundary portion 23A includes a main portion 23Aa and ends 23Ab and 23Ac. The first search coil 23 includes two ends 23Ac.

In the present embodiment, the second search coil 30 has a shape as shown in Fig. 4, but is not limited thereto.

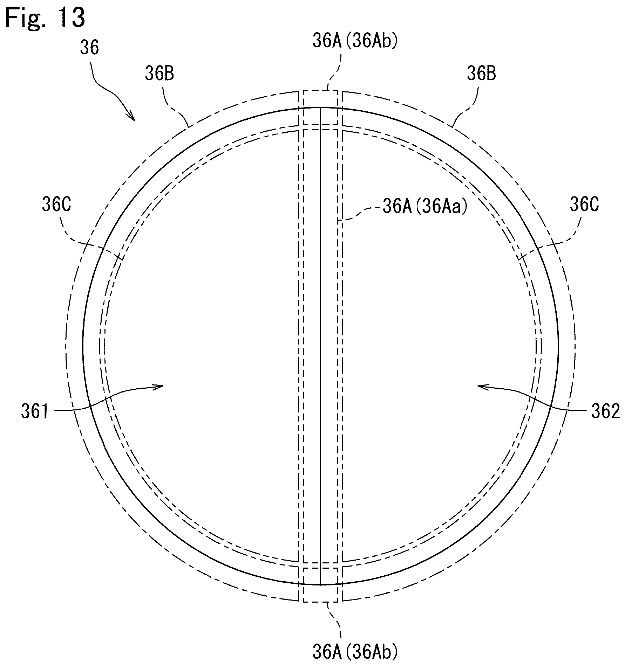

For example, the foreign object detection device 10 may include a circular second search coil 36 as shown in Fig. 13. Fig. 13 schematically shows a plan view showing a second search coil of a modification. The second search coil 36 includes two second coils 361 and 362. The second search coil 36 and its peripheral region include a boundary portion 36A, a peripheral edge portion 36B, and a surrounding portion 36C. The boundary portion 36A includes a main portion 36Aa and an end 36Ab.

In the wireless power supply device 1 of the present embodiment, the configuration in which the transmitter and the receiver are arranged side by side in the vertical direction 100 and the transmission coil 2 and the reception coil 5 face each other in the vertical direction 100 has been described, but the present invention is not limited thereto. For example, the transmitter and the receiver may be arranged side by side in a horizontal direction orthogonal to the vertical direction 100, and the transmission coil 2 and the reception coil 5 may face each other in the horizontal direction. That is, the transmission coil 2 and the reception coil 5 may be arranged to stand vertically or the like.

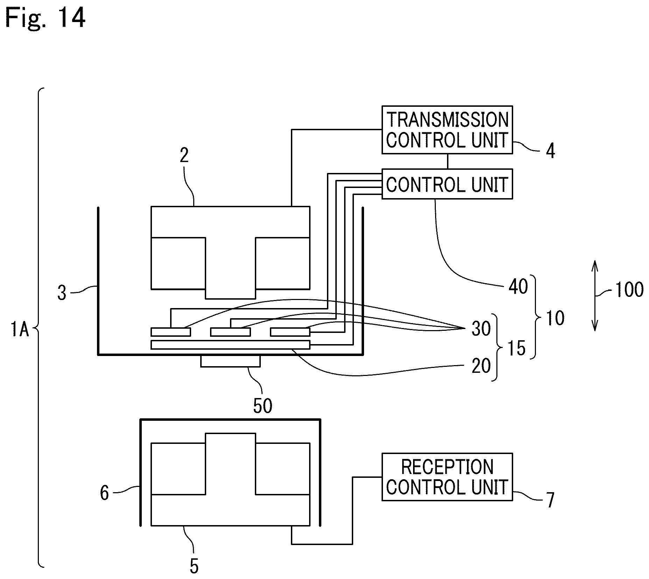

In the wireless power supply device 1 of the present embodiment, the configuration in which the receiver (reception coil 5, reception side cover 6, reception control unit 7) is disposed above the transmitter (transmission coil 2, transmission side cover 3, and transmission control unit 4) and the first search coil 20 and the second search coil 30 of the foreign object detection device 10 are disposed inside the transmission side cover 3 has been described, but the present invention is not limited thereto. Fig. 14 schematically shows a wireless power supply device according to a modification. For example, as in a wireless power supply device 1A shown in Fig. 14, the transmitter may be disposed above the receiver, and the first search coil 20 and the second search coil 30 of the foreign object detection device 10 may be disposed inside the transmission side cover 3.

In the wireless power supply device 1 of the present embodiment, the configuration in which the first search coil 20 and the second search coil 30 of the foreign object detection device 10 are arranged inside the transmission side cover 3 has been described, but the present invention is not limited thereto.

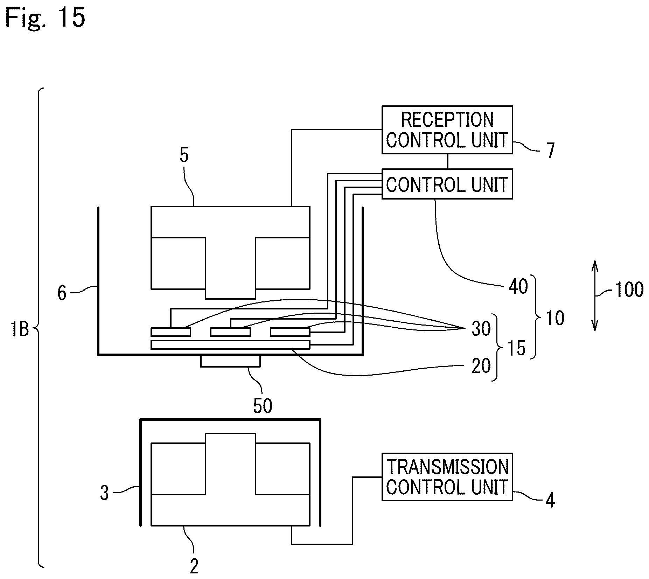

Fig. 15 schematically shows a wireless power supply device according to a modification. For example, in a configuration in which the transmitter is disposed above the receiver as in a wireless power supply device 1B shown in Fig. 15, the first search coil 20 and the second search coil 30 of the foreign object detection device 10 may be disposed inside the reception side cover 6.

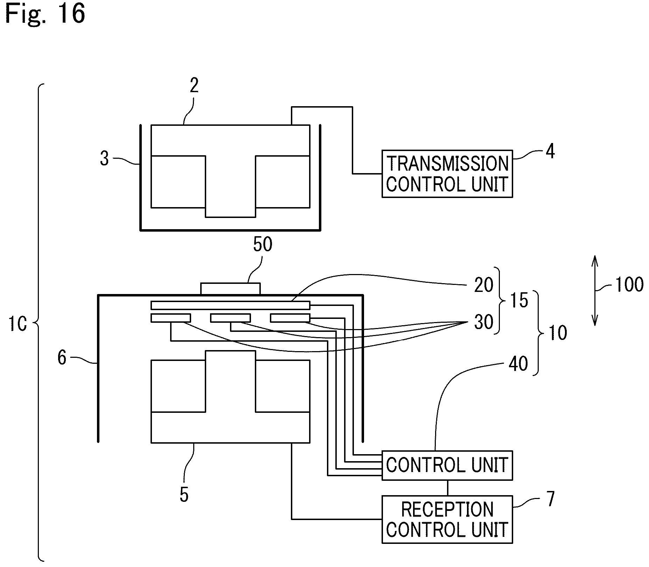

Fig. 16 schematically shows a wireless power supply device according to a modification. In addition, for example, in a configuration in which the receiver is disposed above the transmitter as in a wireless power supply device 1C shown in Fig. 16, the first search coil 20 and the second search coil 30 of the foreign object detection device 10 may be disposed inside the reception side cover 6.

In the present embodiment, the configuration in which the wireless power supply device 1 includes the transmission control unit 4 and the reception control unit 7 has been described, but the present invention is not limited thereto.

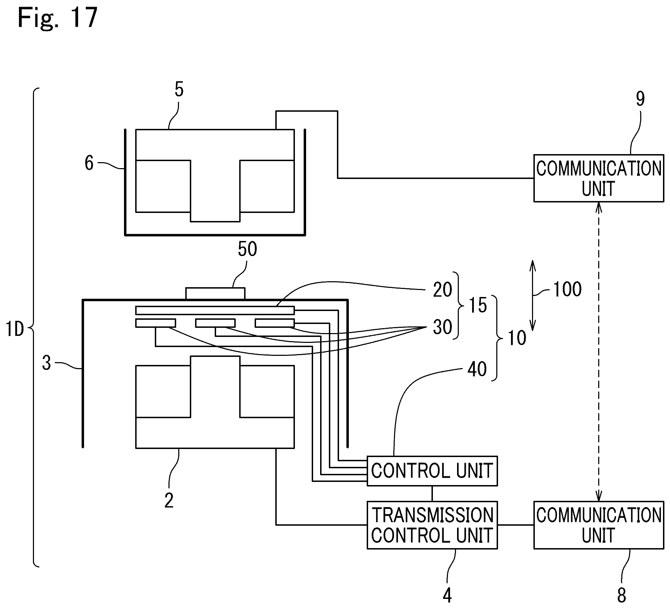

Fig. 17 schematically shows a wireless power supply device according to a modification. For example, a wireless power supply device 1D shown in Fig. 17 includes the transmission control unit 4 but does not include the reception control unit 7. Therefore, the wireless power supply device 1D can reduce the number of components mounted on the receiver as compared with the wireless power supply device 1 shown in Fig. 1.

In the wireless power supply device 1D shown in Fig. 17, the transmitter includes a communication unit 8, and the receiver includes a communication unit 9. The communication unit 8 is electrically connected to the transmission control unit 4. The communication unit 9 is electrically connected to the reception coil 5. As indicated by a broken arrow in Fig. 17, the communication unit 8 and the communication unit 9 are configured to be able to wirelessly communicate with each other. In the case of the configuration shown in Fig. 17, the transmission control unit 4 adjusts (controls) the output voltage on the basis of the information transmitted from the communication unit 9 of the receiver to the communication unit 8 of the transmitter. That is, the adjustment of the output voltage performed by the reception control unit 7 in the wireless power supply device 1 shown in Fig. 1 is performed by the transmission control unit 4 in the wireless power supply device 1D shown in Fig. 17.

Note that the wireless power supply device 1D has a configuration in which the communication units 8 and 9 are added and the reception control unit 7 is removed from the wireless power supply device 1 shown in Fig. 1, but is not limited thereto. For example, the wireless power supply device may be configured such that the communication units 8 and 9 are added and the reception control unit 7 is removed from the wireless power supply device 1A shown in Fig. 14.

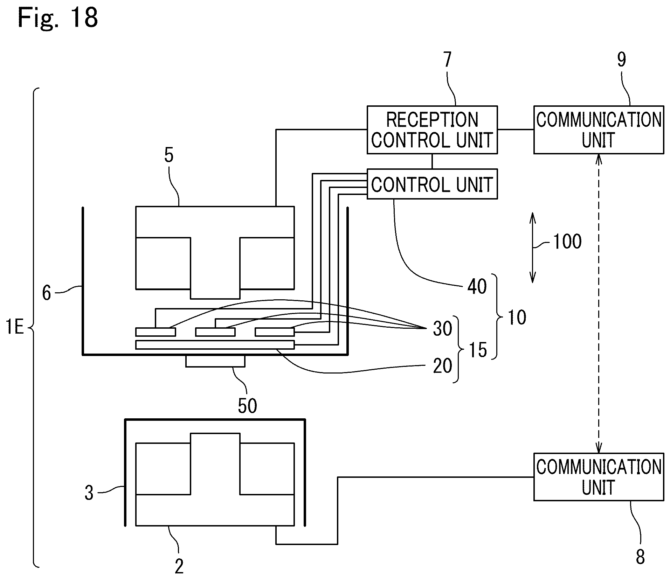

Fig. 18 schematically shows a wireless power supply device according to a modification. For example, a wireless power supply device 1E shown in Fig. 18 includes the reception control unit 7 but does not include the transmission control unit 4. Therefore, the wireless power supply device 1E can reduce the number of components mounted on the transmitter as compared with the wireless power supply device 1B shown in Fig. 15.

In the wireless power supply device 1E shown in Fig. 18, the transmitter includes the communication unit 8, and the receiver includes the communication unit 9. The communication unit 8 is electrically connected to the transmission coil 2. The communication unit 9 is electrically connected to the reception control unit 7. As indicated by a broken arrow in Fig. 18, the communication unit 8 and the communication unit 9 are configured to be able to wirelessly communicate with each other. In the case of the configuration shown in Fig. 18, the reception control unit 7 adjusts (controls) the voltage output from the reception coil 5. For example, the communication unit 8 of the transmitter constantly (or at regular time intervals) performs constant output. The reception control unit 7 that has acquired the information of the output via the communication unit 9 controls the output voltage of the reception coil 5 so that an appropriate voltage can be supplied to the battery or the like on the basis of the acquired information. In the wireless power supply device 1E not including the transmission control unit 4 as shown in Fig. 18, since the control on the power transmission side becomes unnecessary, the time until the start of power supply can be shortened.

Note that the wireless power supply device 1E has a configuration in which the communication units 8 and 9 are added and the transmission control unit 4 is removed from the wireless power supply device 1B shown in Fig. 15, but the present invention is not limited thereto. For example, the wireless power supply device may be configured such that the communication units 8 and 9 are added and the transmission control unit 4 is removed from the wireless power supply device 1C shown in Fig. 16.

In the wireless power supply device 1 of the present embodiment, the configuration in which the second search coil 30 is overlapped on all the ends 20Ab and 20Ac of the first search coil 20 has been described, but the present invention is not limited thereto. For example, the second search coil 30 may be overlapped on the end 20Ac of the first search coil 20, and the second search coil 30 may not be overlapped on the end 20Ab of the first search coil 20. In addition, for example, the second search coil 30 may be overlapped only on some of the ends 20Ab of the first search coil 20.

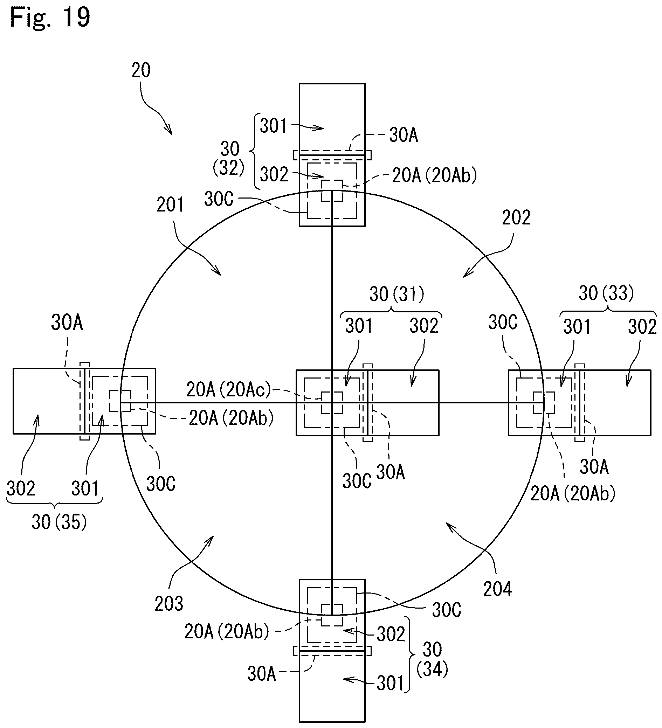

In the wireless power supply device 1 of the present embodiment, as shown in Fig. 5, the configuration in which a part of the boundary portion 30A of the second search coils 32 to 35 arranged to overlap the outer edge portion of the first search coil 20 overlaps the first search coil 20 in plan view has been described, but the present invention is not limited thereto. Fig. 19 schematically shows a plan view showing a first search coil and a second search coil of a modification. For example, as shown in Fig. 19, in plan view, the boundary portion 30A of the second search coils 32 to 35 may be located outside the first search coil 20 and may not overlap the first search coil 20.

According to the configuration shown in Fig. 19, the boundary portion 30A between the two adjacent second coils 301 and 302 is located outside the first search coil 20 in plan view. That is, in plan view, the end 30Ab (low-sensitivity region of the second search coil 30) of the boundary portion 30A between the two adjacent second coils 301 and 302 is located outside the first search coil 20. As a result, it is possible to reduce the interaction of the magnetic flux between the first search coil 20 and the second search coil 30.

In the present embodiment, the configuration in which the foreign object detection device 10 is provided in the wireless power supply device 1 has been described, but the foreign object detection device 10 is not limited to be provided in the wireless power supply device 1. The foreign object detection device 10 can be applied to any device as long as the device can adopt a self-excitation method that detects the presence or absence of a foreign object based on a voltage applied to the own coil. The foreign object detection device 10 is applicable to, for example, a food inspection device, a waste sorting machine, and the like.

The above description can also be expressed as follows.
(1) A foreign object detection device 10 according to one aspect of the present disclosure comprises: a first search coil 20 that comprises a plurality of first coils 201, 202, 203, and 204 arranged in plan view; at least one second search coil 30 that comprises a plurality of second coils 301 and 302 arranged in plan view; and a control unit 40 applying a voltage to the first search coil 20 and the second search coil 30, in the first search coil 20, the plurality of first coils 201, 202, 203, and 204 are electrically connected in series, and, when currents I1 and I4 in a first winding direction flow through one of the two adjacent first coils 201 and 204, currents I2 and I3 in a second winding direction opposite to the first winding direction flow through another one of the two adjacent first coils 202 and 203, in the second search coil 30, the plurality of second coils 301 and 302 are electrically connected in series, and when a current I5 in the first winding direction flows through one 301 of the two adjacent second coils, a current I6 in the second winding direction flows through another one 302 of the two adjacent second coils, in the first search coil 20, a wiring (wiring patterns 201B, 201C, 204B, and 204C) comprised in one of the two first coils 201 and 204 and a wiring (wiring patterns 202B, 202C, 203B, and 203C) comprised in the other one of the two first coils 202 and 203 are arranged in parallel and close to each other at a boundary portion 20A between the two adjacent first coils, the control unit 40 determines presence or absence of a foreign object 50 on the first search coil 20 by applying a voltage to the first search coil 20, and determines presence or absence of a foreign object 50 on the second search coil 30 by applying a voltage to the second search coil 30, and in plan view, the second search coil 30 is arranged with a region (surrounding portion 30C) surrounded by a wiring (wiring patterns 301A and 301B) of the second coil 301 overlapping a part of the boundary portion 20A of the first coils 201, 202, 203, and 204, the part comprising ends 20Ab and 20Ac of the boundary portion 20A of the first coils 201, 202, 203, and 204.
(2) In the foreign object detection device 10 according to (1), in plan view, an end 20Ac of the boundary portion 20A of the first coils 201, 202, 203, and 204 overlapped by a region (surrounding portion 30C) surrounded by a wiring of the second coil 301 may be surrounded by the plurality of first coils 201, 202, 203, and 204.
(3) The first search coil may comprise the four first coils arranged in two rows and two columns in plan view, and in plan view, the second search coil may be arranged with a region surrounded by a wiring of the second coil overlaps the boundary portion located at a central portion of the four first coils.
(4) In the foreign object detection device 10 according to any one of (1) to (3), one second search coil 30 may be smaller than the first search coil 20 in plan view.
(5) In the foreign object detection device 10 according to any one of (1) to (4), in plan view, in the second search coil 30 overlapping an outer edge portion (wiring patterns 201A, 202A, 203A, and 204A) of the first search coil 20, the boundary portion 30A of the two adjacent second coils 301 and 302 may be located outside the first search coil 20.
(6) In the foreign object detection device 10 according to any one of (1) to (5), the second search coil 30 may comprise the two second coils 301 and 302.
(7) In the foreign object detection device 10 according to any one of (1) to (6), the control unit 40 may selectively apply a voltage to the first search coil 20 and the second search coil 30.
(8) In the foreign object detection device 10 according to (7), the control unit 40 may determine presence or absence of a foreign object 50 on the first search coil 20 by applying a voltage to the first search coil 20, and then determine presence or absence of a foreign object 50 on the second search coil 30 by applying a voltage to the second search coil 30.
(9) A coil device 15 according to one aspect of the present disclosure comprises: a first search coil 20 that comprises a plurality of first coils 201, 202, 203, and 204 arrayed in plan view; and at least one second search coil 30 that comprises a plurality of second coils 301 and 302 arranged in plan view, in the first search coil 20, the plurality of first coils 201, 202, 203, and 204 are electrically connected in series, and when currents I1 and I4 in a first winding direction flow through one of the two adjacent first coils 201 and 204, currents I2 and I3 in a second winding direction opposite to the first winding direction flow through another one of the two adjacent first coils 202 and 203, in the second search coil 30, the plurality of second coils 301 and 302 are electrically connected in series, and when a current I5 in the first winding direction flows through one 301 of the two adjacent second coils, a current I6 in the second winding direction flows through another one 302 of the two adjacent second coils, in the first search coil 20, a wiring (wiring patterns 201B, 201C, 204B, and 204C) comprised in one of the two first coils 201 and 204 and a wiring (wiring patterns 202B, 202C, 203B, and 203C) comprised in the other one of the two first coils 202 and 203 are arranged in parallel and close to each other at a boundary portion 20A between the two adjacent first coils, and in plan view, the second search coil 30 is arranged with a region (surrounding portion 30C) surrounded by a wiring (wiring patterns 301A and 301B) of the second coil 301 overlapping a part of the boundary portion 20A of the first coils 201, 202, 203, and 204, the part comprising ends 20Ab and 20Ac of the boundary portion 20A of the first coils 201, 202, 203, and 204.

Note that, by appropriately combining arbitrary embodiments among the various embodiments described above, the effects of the respective embodiments can be achieved.

Although the present disclosure has been sufficiently described in connection with preferred embodiments with reference to the drawings as appropriate, various modifications and corrections will be apparent to those skilled in the art. Such variations and modifications should be understood to be comprised within the scope of the present invention according to the appended claims as long as they do not depart therefrom.

### REFERENCE SIGNS LIST

- 10: foreign object detection device
- 20: first search coil
- 20A: boundary portion
- 20Ab: end
- 20Ac: end
- 201: first coil
- 201B: wiring pattern (wiring)
- 201C: wiring pattern (wiring)
- 202: first coil
- 202B: wiring pattern (wiring)
- 202C: wiring pattern (wiring)
- 203: first coil
- 203B: wiring pattern (wiring)
- 203C: wiring pattern (wiring)
- 204: first coil
- 204B: wiring pattern (wiring)
- 204C: wiring pattern (wiring)
- 30: second search coil
- 30C: surrounding portion (region surrounded by wiring of second coil)
- 301: second coil
- 301A: wiring pattern (wiring)
- 301B: wiring pattern (wiring)
- 302: second coil
- 302A: wiring pattern (wiring)
- 302B: wiring pattern (wiring)
- 40: control unit

## Claims

1. A foreign object detection device comprising:
a first search coil comprising a plurality of first coils arranged in plan view;
at least one second search coil comprising a plurality of second coils arranged in plan view; and
a control unit applying a voltage to the first search coil and the second search coil, wherein
in the first search coil, the plurality of first coils are electrically connected in series, and when currents in a first winding direction flow through one of the two adjacent first coils, currents in a second winding direction opposite to the first winding direction flow through another one of the two adjacent first coils,
in the second search coil, the plurality of second coils are electrically connected in series, and when a current in the first winding direction flows through one of the two adjacent second coils, a current in the second winding direction flows through another one of the two adjacent second coils,
in the first search coil, a wiring comprised in one of the two first coils and a wiring comprised in the other one of the two first coils are arranged in parallel and close to each other at a boundary portion between the two adjacent first coils,
the control unit determines presence or absence of a foreign object on the first search coil by applying a voltage to the first search coil, and determines presence or absence of a foreign object on the second search coil by applying a voltage to the second search coil, and
in plan view, the second search coil is arranged with a region surrounded by a wiring of the second coil overlapping a part of the boundary portion of the first coils, the part comprising ends of the boundary portion of the first coils.

2. The foreign object detection device according to claim 1, wherein
in plan view, an end of the boundary portion of the first coils overlapped by a region surrounded by a wiring of the second coil is surrounded by the plurality of first coils.

3. The foreign object detection device according to claim 2, wherein
the first search coil comprises the four first coils arranged in two rows and two columns in plan view, and
in plan view, the second search coil is arranged with a region surrounded by a wiring of the second coil overlaps the boundary portion located at a central portion of the four first coils.

4. The foreign object detection device according to any one of claims 1 to 3, wherein
one second search coil is smaller than the first search coil in plan view.

5. The foreign object detection device according to any one of claims 1 to 4, wherein
in plan view, in the second search coil overlapping an outer edge portion of the first search coil, the boundary portion of the two adjacent second coils is located outside the first search coil.

6. The foreign object detection device according to any one of claims 1 to 5, wherein
the second search coil comprises the two second coils.

7. The foreign object detection device according to any one of claims 1 to 6, wherein
the control unit selectively applies a voltage to the first search coil and the second search coil.

8. The foreign object detection device according to claim 7, wherein
the control unit determines presence or absence of a foreign object on the first search coil by applying a voltage to the first search coil, and then determine presence or absence of a foreign object on the second search coil by applying a voltage to the second search coil.

9. A coil device according to one aspect of the present disclosure comprising:
a first search coil comprising a plurality of first coils arrayed in plan view; and
at least one second search coil comprising a plurality of second coils arranged in plan view, wherein
in the first search coil, the plurality of first coils are electrically connected in series, and when currents in a first winding direction flow through one of the two adjacent first coils, currents in a second winding direction opposite to the first winding direction flow through another one of the two adjacent first coils,
in the second search coil, the plurality of second coils are electrically connected in series, and when a current in the first winding direction flows through one of the two adjacent second coils, a current in the second winding direction flows through another one of the two adjacent second coils,
in the first search coil, a wiring comprised in one of the two first coils and a wiring comprised in the other one of the two first coils are arranged in parallel and close to each other at a boundary portion between the two adjacent first coils, and
in plan view, the second search coil is arranged with a region surrounded by a wiring of the second coil overlapping a part of the boundary portion of the first coils, the part comprising ends of the boundary portion of the first coils.
